# FASCICULE DE BREVET EUROPEEN

(11) **EP 0 531 501 B1**
(45) Date de publication et mention de la délivrance du brevet: **24.05.1995**
(21) Numéro de dépôt: 92908380.6
(22) Date de dépôt: 20.03.1992
(51) Int. Cl.: B23K 7/06

(54) **PROCEDE ET DISPOSITIF D'EBAVURAGE NOTAMMENT D'UNE BANDE D'ACIER DECOUPEE EN BRAMES**
ENTGRATVERFAHREN UND - VORRICHTUNG, INSBESONDERE FÜR EIN IN STRÄNGEN GESCHNITTENES STAHLBAND
METHOD AND DEVICE FOR DEBURRING A STEEL STRIP CUT INTO SLABS

(30) Priorité: 25.03.1991 FR 9103584
(43) Date de publication de la demande: 17.03.1993
(73) Titulaire: SOLLAC, 92800 Puteaux (FR)
(72) Inventeur: VOGRIN, Erwin, F-68120 Pfastatt (FR)
(74) Mandataire: Lanceplaine, Jean-Claude
(86) Numéro de dépôt international: FR9200260
(87) Numéro de publication internationale: WO9216331

(56) Documents cités:
- DE-A- 3 545 729
- WORLD PATENTS INDEX Section Ch, Week 7722, Derwent Publications Ltd., London,GB; Class M, AN 77-38716Y & JP-A-5248 544 (NIPPON OXYGEN KK) 18 Avril 1977

## Description

La présente invention concerne un procédé et un dispositif d'ébavurage notamment d'une bande d'acier de coulée continue découpée en brames.

Dans la coulée continue d'acier, on obtient un produit qui se présente sous la forme d'une bande d'acier épaisse qu'il convient de couper à des longueurs déterminées afin d'obtenir des brames qui sont ensuite traitées dans des opérations de laminage.

La bande d'acier issue de la coulée continue est découpée en brames par oxycoupage à l'aide d'un chalumeau qui projette son jet perpendiculairement à l'une des faces principales de la bande.

L'action du jet de coupe du chalumeau entraîne une entaille dans le métal, entaille qui forme une découpe lorsque l'on déplace le chalumeau au-dessus de la bande.

L'inconvénient de l'oxycoupage réside dans le fait qu'il provoque sur la face principale opposée à celle recevant le jet de coupe du chalumeau, des bavures d'acier en fusion.

Ces bavures constituées des résidus d'oxycoupage se forment de part et d'autre de la découpe, en raison de la perturbation de l'évacuation des résidus de coupe engendrés par la détente des gaz résiduels à la sortie de ladite découpe.

Ce phénomène provoque un collage des résidus non évacués sur chaque bord de la découpe sur la face inférieure de la brame.

Pour éliminer ces bavures, plusieurs solutions sont utilisées jusqu'à présent.

Une solution consiste à meuler les bavures manuellement.

Une autre solution connue consiste à utiliser une machine comportant un ensemble de lames tranchantes.

Ces lames sont portées par un chariot qui se déplace suivant l'axe longitudinal de la brame sous la face inférieure de cette dernière. Les lames sont mises en contact avec ladite face inférieure et sectionnent les résidus d'oxycoupage.

Ces solutions présentent des inconvénients.

En effet, elles nécessitent une opération supplémentaire sur la brame, distincte de l'opération d'oxycoupage, entraînant de ce fait la mise en place d'un poste d'ébavurage avec les surcoûts et les entretiens qui en découlent.

On connaît dans le brevet DE-A-3.545.729, un procédé d'ébavurage d'une bande d'acier découpée à l'aide d'un chalumeau d'oxycoupage dans lequel on élimine les bavures après oxycoupage.

La présente invention a pour but de proposer un procédé d'ébavurage et un dispositif pour la mise en oeuvre de ce procédé, permettant d'éviter la formation de bavures simultanément à l'opération d'oxycoupage et de ce fait de supprimer le poste supplémentaire d'ébavurage des brames.

La présente invention a donc pour objet un procédé d'ébavurage notamment d'une bande d'acier découpée en brames, à l'aide d'un chalumeau d'oxycoupage dont le jet est perpendiculaire à l'une des faces principale de la bande, notamment pour découper la bande en brames, caractérisé en ce qu'on dirige, sur la face principale de la bande opposée à ladite face principale recevant le jet du chalumeau d'oxycoupage et dans la zone de découpage de la bande, un jet de fluide inerte vis à vis du jet du chalumeau, ledit jet de fluide empêchant la génération des bavures en granulant l'éjection du métal avant sa solidification.

Selon d'autres caractéristiques de l'invention :
- le jet de fluide possède un angle d'ouverture horizontale et un angle d'ouverture verticale compris entre 10° et 40°,
- le jet de fluide est formé de deux jets dirigés l'un vers l'autre et se coupant en une zone comprenant l'axe du chalumeau d'oxycoupage,
- le jet de fluide est formé de trois jets dirigés les uns vers les autres et se coupant en une zone comprenant l'axe du chalumeau d'oxycoupage,
- le ou les jets de fluide sont formés par un jet plat dont l'angle d'ouverture horizontal est compris entre 10° et 40°,
- le fluide inerte est de l'air ou de l'azote.
- on rajoute au fluide inerte de l'oxygène dans une proportion de 10 à 40%.

La présente invention a également pour objet un dispositif d'ébavurage pour la mise en oeuvre de ce procédé, comprenant un chalumeau d'oxycoupage perpendiculaire à l'une des faces principales de la bande, ledit chalumeau étant déplaçable, d'une part, selon une direction transversale au sens de défilement de la bande et, d'autre part, selon une direction parallèle audit sens de défilement et à une vitesse identique à la bande, caractérisé en ce qu'il comprend des moyens de soufflage d'un fluide sous pression dans la zone de découpage sur l'autre face principale de ladite bande.

Selon d'autres caractéristiques de l'invention :
- les moyens de soufflage sont déplaçables en synchronisation avec le chalumeau d'oxycoupage, d'une part, selon une direction transversale au sens de défilement de la bande et, d'autre part, selon une direction parallèle audit sens de défilement et à une vitesse identique à ladite bande.
- les moyens de soufflage comprennent une buse de projection de fluide disposée dans le plan de la découpe,
- les moyens de soufflage comprennent deux buses de protection de fluide orientées l'une vers l'autre et disposées de part et d'autre du plan de la découpe, les axes desdites buses se coupant sensiblement dans l'axe du chalumeau d'oxycoupage,
- les moyens de soufflage comprennent trois buses de projection de fluide orientées les unes vers les autres et dont les axes se coupent sensiblement dans l'axe du chalumeau d'oxycoupage, l'une desdites buses étant disposée dans le plan de ladite coupe et les deux autres étant disposées de part et d'autre du plan de ladite découpe,
- chaque buse est orientable dans un plan horizontal et dans un plan vertical,
- l'axe de chaque buse détermine avec l'axe du chalumeau d'oxycoupage un angle d'incidence compris entre 70° et 110°,
- chaque buse est formée par une buse à jet plat,
- chaque buse est formée par une buse à jet conique.

D'autres caractéristiques et avantages de l'invention apparaîtront au cours de la description qui va suivre, faite en se référant aux dessins annexés donnés uniquement à titre d'exemple, sur lesquels :
- la Fig. 1 est une vue d'ensemble schématique d'une installation d'oxycoupage d'une bande d'acier comportant un dispositif d'ébavurage selon l'invention,
- la Fig. 2 est une vue de dessus de la Fig. 1.
- la Fig. 3 est une vue en élévation latérale de l'organe de support des moyens de soufflage du dispositif d'ébavurage selon l'invention,
- la Fig. 4 est une vue schématique en élévation latérale des moyens de soufflage selon un premier mode de réalisation,
- la Fig. 5 est une vue de dessus de la Fig. 4,
- la Fig. 6 est une vue schématique en élévation latérale des moyens de soufflage selon un second mode de réalisation,
- la Fig. 7 est une vue schématique en élévation latérale des moyens de soufflage selon un troisième mode de réalisation,
- la Fig. 8 est une vue en coupe selon la ligne 8-8 de la Fig. 7,
- la Fig. 9 est une vue en perspective des moyens de soufflage selon la Fig. 7.

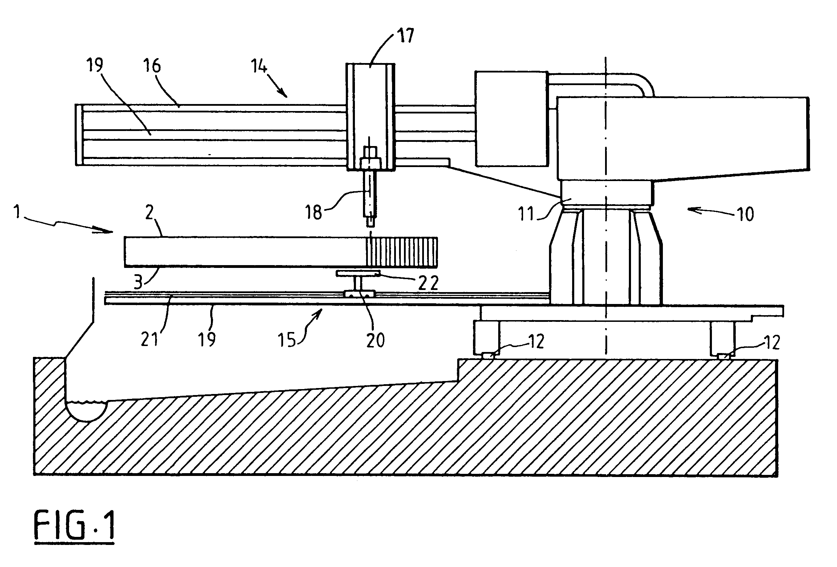

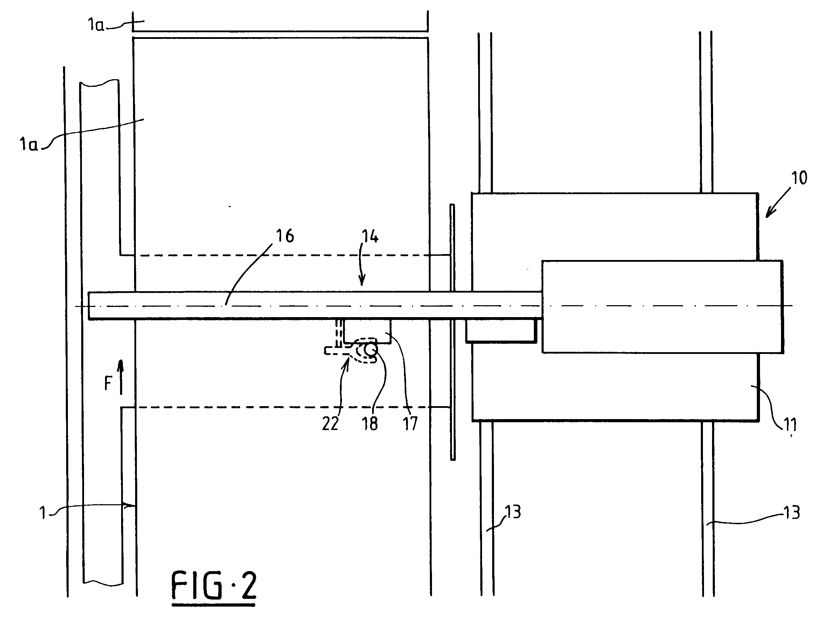

Sur les Figs. 1 et 2, on a représenté une bande d'acier 1, sortant d'une coulée continue et circulant sur des rouleaux, non représentés.

Le sens de défilement de la bande 1 est représenté par la flèche F sur la FIg. 2.

Cette bande 1 a une section sensiblement rectangulaire.

La bande 1 est découpée à des longueurs déterminées par une installation d'oxycoupage 10 afin d'obtenir des brames 1a (Fig. 2) qui sont ensuite traitées dans des opérations de laminage.

L'installation 10 représentée aux Figs. 1 et 2 comporte un bâti 11 monté mobile, selon une direction paralléle au sens de défilement de la bande 1, sur des roues 12 qui se déplacent sur des rails 13.

L'installation 10 prend également un dispositif de découpage 14 s'étendant au-dessus de la face principale supérieure 2 de la bande 1 et un dispositif d'ébavurage 15 s'étendant au-dessous de la face principale inférieure 3 de ladite bande.

Le dispositif de découpage 14 est formé par un bras horizontal 16 perpendiculaire au sens de défilement de la bande 1 et s'étendant sur toute la largeur de cette bande.

Le bras 16 est relié au bâti 11. Ce bras 16 supporte un chariot mobile 17 qui porte un chalumeau d'oxycoupage 18 à axe vertical et dont le jet est perpendiculaire à la face principale supérieure 2 de la bande 1.

Le chariot 17 et par conséquent le chalumeau 18 se déplacent sur le bras 16 perpendiculairement au sens de défilement de la bande 1 grâce à un mécanisme d'entraînement 19.

Ce mécanisme d'entraînement 19 est constitué, par exemple, par une vis sans fin entraînée en rotation par un moteur à vitesse constante ou par une crémaillère.

Le dispositif d'ébavurage 15 est formé par un bras horizontal 19 perpendiculaire au sens de défilement de la bande 1 et s'étendant sur toute la largeur de ladite bande.

Le bras 19 est relié au bâti 11. Ce bras 19 supporte un chariot 20 qui se déplace sur des rails 21 prévus sur ledit bras.

Le chariot 20 supporte des moyens 22 de soufflage d'un fluide sous pression et se déplace perpendiculairement au sens de défilement de la bande 1 grâce à un mécanisme d'entraînement de type connu, non représenté.

Les chariots 17 et 20 respectivement des dispositifs de découpage 11 et d'ébavurage 15, se déplacent, d'une part, en synchronisation l'un avec l'autre selon une direction transversale au sens de défilement de la bande 1 et, d'autre part, selon une direction parallèle audit sens de défilement et à une vitesse identique à ladite bande par l'intermédiaire du bâti 11 de façon à découper la bande 1 en brames la et simultanément à éliminer les bavures se formant sur la face principale inférieure 3, comme on le verra ultérieurement.

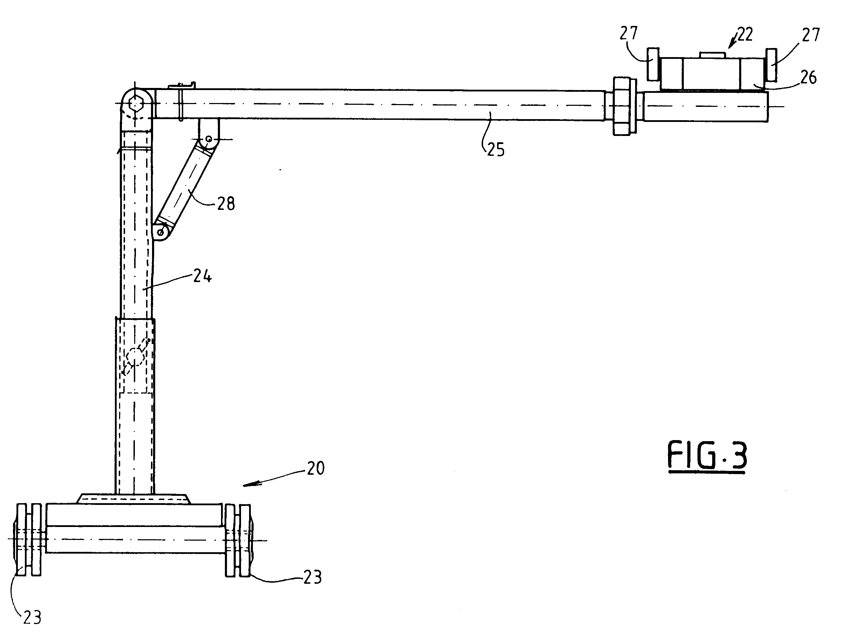

En se reportant maintenant à la Fig. 3, on va décrire plus en détails le chariot 20 du dispositif d'ébavurage 15.

Le chariot 20 comporte des roues 23 qui portent une tige verticale 24 réglable en hauteur et à la partie supérieure de laquelle est montée articulée une tige horizontale 25.

A l'extrémité libre de la tige horizontale 25 sont montés les moyens de soufflage 22.

Ces moyens de soufflage 22 sont constitués notamment par une tête de soufflage 26 munie de galets 27 dépassant de la partie supérieure de ladite tête et destinés à venir s'appliquer sur la face principale inférieur 3 de la brame 1.

A cet effet, pour maintenir les galets 27 contre la face inférieure 3, un vérin 28 est monté entre les deux tiges 24 et 25.

D'une manière générale, la tête de soufflage 26 est située au-dessous de la partie de la brame 1 qui n'est pas encore découpée par le chalumeau d'oxycoupage 18.

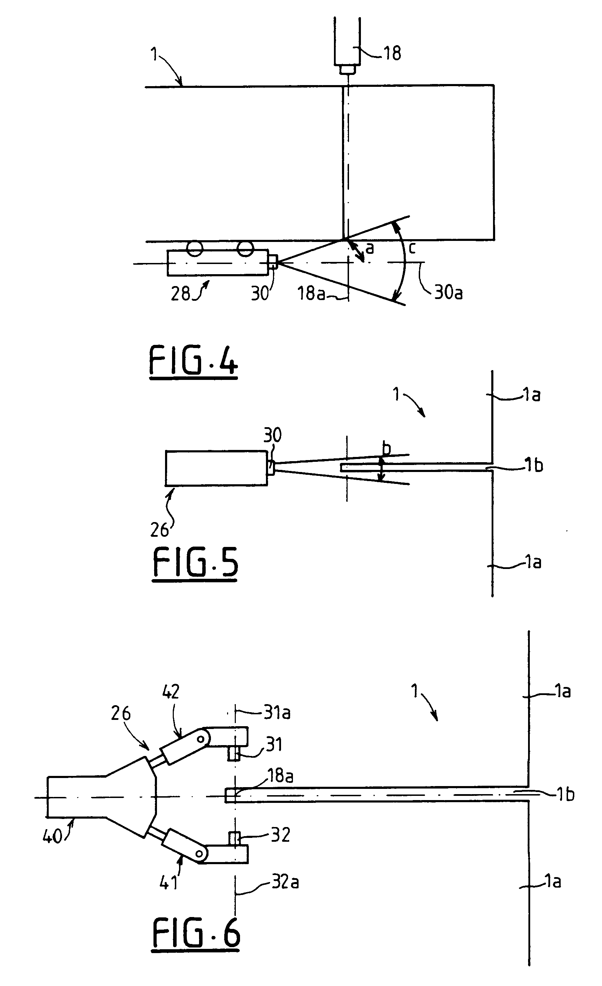

En se reportant maintenant aux Figs. 4 à 9, on va décrire plusieurs modes de réalisation de la tête de soufflage 26.

Selon un premier mode de réalisation représenté aux Figs. 4 et 5, la tête de soufflage 26 comporte une buse de projection d'un fluide sous pression disposée dans le plan de ladite découpe 1b réalisée par le chalumeau d'oxycoupage 18 sur la bande 1.

L'axe 30a de la buse 30 détermine avec l'axe 18a du chalumeau 18 un angle d'incidence "a" compris entre 70° et 110°.

La buse 30 peut être une buse à jet conique ou une buse à jet plat.

Dans le cas d'une buse à jet conique, le jet de fluide possède un angle d'ouverture horizontale "b" compris entre 10° et 40°, de préférence égal à 15°, et un angle d'ouverture vertical "c" compris entre 10° et 40°, de préférence égal à 30°.

Dans le cas d'une buse à jet plat, le jet de fluide possède un angle d'ouverture horizontal "b" compris entre 10° et 40° et de préférence égal à 30°.

La buse 30 peut être orientable dans un plan vertical et dans un plan horizontal.

Selon un second mode de réalisation représenté à la Fig. 6, la tête de soufflage 26 comporte deux buses 31 et 32 de projection de fluide orientées l'une vers l'autre et disposées de part et d'autre du plan de la découpe 1b réalisée par le chalumeau d'oxycoupage 18 sur la bande 1.

Les axes 31a et 32a des buses, respectivement 31 et 32, se coupent sensiblement dans l'axe 18a du chalumeau d'oxycoupage 18.

Ces buses 31 et 32 sont des buses à jet conique ou des buses à jet plat, comme précédemment et sont orientables dans un plan vertical et dans un plan horizontal.

D'autre part, les axes 31a et 32a des buses, respectivement 31 et 32, déterminent également avec l'axe 18a du chalumeau 18 un angle d'incidence compris entre 70° et 110°.

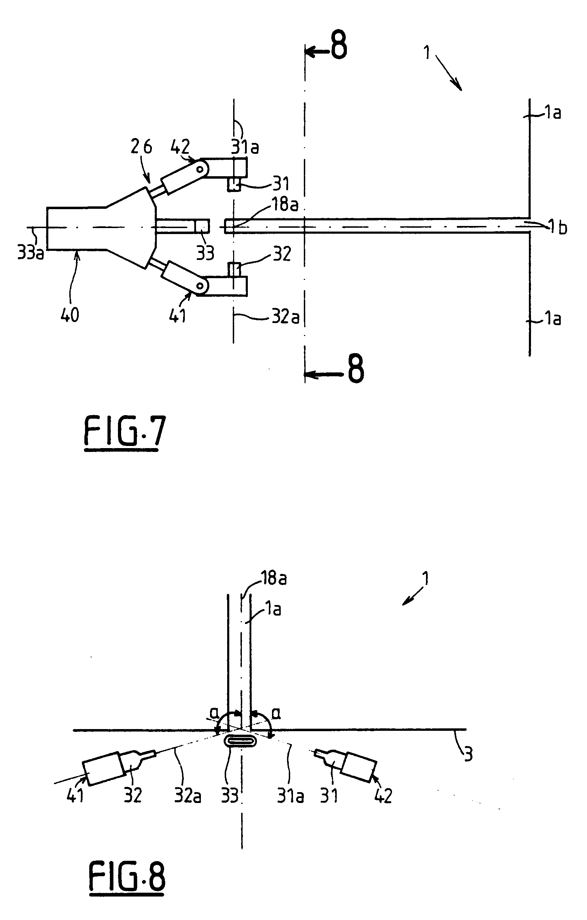

Selon un troisième mode de réalisation représenté aux Figs. 7 et 8, la tête de soufflage 26 comporte trois buses de projection de fluide, deux buses latérales 31 et 32 et une buse centrale 33, orientées les unes vers les autres et dont les axes, respectivement 31a, 32a et 33a, se coupent sensiblement dans l'axe 18a du chalumeau de découpage 18.

La buse centrale 33 est disposée dans le plan de ladite découpe 1b réalisée par le chalumeau d'oxycoupage 18 sur la bande 1 et les buses latérales 31 et 32 sont disposées de part et d'autre du plan de ladite découpe 1b.

Ces buses 31, 32 et 33 sont des buses à jet conique ou des buses à jet plat, comme précédemment, et sont orientables dans un plan vertical et dans un plan horizontal.

Par ailleurs, les axes 31a et 32a des buses 31 et 32 déterminent avec l'axe 18a du chalumeau 18 un angle d'incidence "a" compris entre 70° et 110° (Fig. 8).

L'axe 33a de la buse 33 est parallèle à la face principale inférieure 3 de la bande 1, mais peut également former un angle d'incidence compris entre 70° et 110° avec l'axe 18a du chalumeau d'oxycoupage 18.

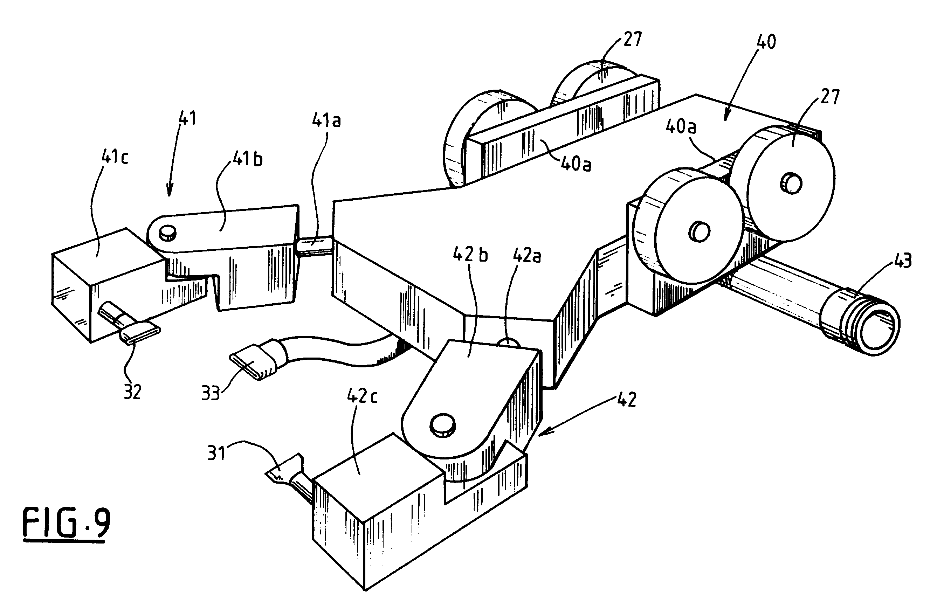

En se reportant à la Fig. 9, on va décrire un mode de réalisation préférentiel de la tête de soufflage 26.

La tête de soufflage 26 supportée par le chariot 20 par l'intermédiaire des tiges 24 et 25 (Fig. 3) a la forme générale d'un "Y".

Cette tête 26 est constituée d'une branche centrale 40 et de deux branches latérales 41 et 42.

La branche centrale 40 comporte, sur chacune des ses parois latérales, une petite plaque 40a supportant les galets 27.

La branche latérale 41 est formée par un tube 41a constituant un axe d'articulation, monté sur la branche centrale 40 et à l'extrémité duquel est monté un premier support 41b.

A l'extrémité de ce premier support 41b est monté articulé un second support 41c supportant la buse 32.

Le tube 41a permet de pouvoir orienter la buse 32 dans un plan vertical et l'articulation entre les supports 41b et 41c permet d'orienter la buse 32 dans un plan horizontal.

Il en est de même pour la branche latérale 42 qui comporte un tube 41a, un premier support 42b et un second support 42c portant la buse 31.

La branche centrale 40a porte éventuellement la buse 33.

La tête 26 comporte également un conduit 23 qui alimente simultanément les buses 31, 32 et 33 en fluide sous pression.

Ce fluide sous pression inerte vis à vis du jet du chalumeau d'oxycoupage 18 est, par exemple, de l'air ou de l'azote.

D'autre part, on peut rajouter au fluide inerte de l'oxygène dans une proportion de 10 à 40%.

L'ensemble de l'installation peut être piloté par un automate gérant les différentes fonctions, comme par exemple les déplacements du bâti 11, du chalumeau d'oxycoupage 18 et de la tête de soufflage 26.

Lors du découpage de la bande 1 en brames la, le bâti 11 se déplace parallèlement au sens de défilement de la bande et le chalumeau d'oxycoupage 18 ainsi que la tête de soufflage 26 se déplacent en même temps de part et d'autre de ladite bande.

L'action du jet de coupe du chalumeau 18 perpendiculairement à la face principale supérieure 2 de la buse 1 provoque une entaille dans le métal qui forme la découpe 1b lorsque le chalumeau se déplace.

En raison de la perturbation de l'évacuation des résidus de coupe engendrés par la détente des gaz résiduels à la sortie de la découpe 1b, des bavures constituées des résidus d'oxycoupage se forment de part et d'autre de ladite découpe 1b sur la face principale inférieure 3 de la bande 1.

La projection du ou des jets de fluide par la ou les buses 32 et 33 dans la zone de découpage, sur la face principale 3 de la bande 1 opposée à la face principale 2 recevant le jet du chalumeau, empêche la génération de ces bavures, en granulant l'éjection du métal avant sa solidification, quand le métal est encore en phase liquide.

Ainsi, le procédé selon la présente invention permet d'éviter la formation des bavures issues des résidus d'oxycoupage, simultanément au découpage de la bande et par conséquent de supprimer le poste d'ébavurage dans les installations de coulée continue.

Outre, l'application spécifique citée ci-dessus, le procédé et le dispositif selon l'invention peuvent être mis en oeuvre dans d'autres applications, par exemple pour l'élimination de toutes bavures générées dans une découpe par un chalumeau oxycoupeur.

## Revendications

1. Procédé de découpe et d'ébavurage d'une bande d'acier (1), la bande (1) étant découpée à l'aide d'un chalumeau d'oxycoupage (18) dont le jet est perpendiculaire à l'une (2) des faces principales de la bande (1), notamment pour découper la bande (1) en brames (1a), caractérisé en ce qu'on dirige, sur la face principale (3) de la bande (1) opposée à ladite face principale (2) recevant le jet du chalumeau d'oxycoupage (18) et dans la zone de découpage de la bande (1), un jet de fluide inerte vis à vis du jet du chalumeau, ledit jet de fluide empêchant la génération des bavures en granulant l'éjection du métal avant sa solidification.

2. Procédé selon la revendication 1, caractérisé en ce que le jet de fluide possède un angle d'ouverture horizontal et un angle d'ouverture vertical compris entre 10° et 40°.

3. Procédé selon les revendications 1 et 2, caractérisé en ce que le jet de fluide est formé par deux jets dirigés l'un vers l'autre et se coupant en une zone comprenant l'axe (18a) du chalumeau d'oxycoupage (18).

4. Procédé selon les revendications 1 et 2, caractérisé en ce que le jet de fluide est formé de trois jets dirigés les uns vers les autres et se coupant en une zone comprenant l'axe (18a) du chalumeau d'oxycoupage (18).

5. Procédé selon l'une quelconque des revendications précédentes, caractérisé en ce que le ou les jets de fluide sont formés par un jet plat dont l'angle d'ouverture horizontal est compris entre 10° et 40°.

6. Procédé selon l'une quelconque des revendications précédentes, caractérisé en ce que le fluide inerte est de l'air ou de l'azote.

7. Procédé selon l'une quelconque des revendications précédentes, caractérisé en ce qu'on rajoute au fluide inerte de l'oxygène dans une proportion de 10 à 40%

8. Dispositif d'ébavurage pour la mise en oeuvre du procédé selon l'une quelconque des revendications 1 a 7, comprenant un chalumeau d'oxycoupage (18) perpendiculaire à l'une (2) des faces principales de la bande (1), ledit chalumeau (18) étant déplaçable, d'une part, selon une direction transversale au sens de défilement de la bande (1) et, d'autre part, selon une direction parallèle audit sens de défilement et à une vitesse identique à ladite bande (1), caractérisé en ce qu'il comprend des moyens (22, 26) de soufflage d'un fluide sous pression dans la zone de découpage sur l'autre face principale (3) de la bande (1).

9. Dispositif selon la revendication 8, caractérisé en ce que les moyens (22, 26) de soufflage sont déplaçables en synchronisation avec le chalumeau d'oxycoupage (18), d'une part, selon une direction transversale au sens de défilement de la bande (1) et, d'autre part, selon une direction parallèle audit sens de défilement et à une vitesse identique à ladite bande (1).

10. Dispositif selon les revendications 8 et 9, caractérisé en ce que les moyens (22, 26) de soufflage comprennent une buse (30) de projection du fluide disposée dans le plan de la découpe (1b) de la bande (1).

11. Dispositif selon les revendications 8 et 9, caractérisé en ce que les moyens (22, 26) de soufflage comprennent deux buses (31, 32) de projection du fluide orientées l'une vers l'autre et disposées de part et d'autre du plan de la découpe (1b) de la bande (1) , les axes (31a, 32a) desdites buses (31, 32) se coupant sensiblement dans l'axe (18a) du chalumeau d'oxycoupage (18).

12. Dispositif selon les revendications 8 et 9, caractérisé en ce que les moyens (22, 26) de soufflage comprennent trois buses (31, 32, 33) de projection du fluide orientées les unes vers les autres et dont les axes (31a, 32a, 33a) se coupent sensiblement dans l'axe (18a) du chalumeau d'oxycoupage (18), l'une (33) desdites buses étant disposée dans le plan de la découpe (1b) de la bande (1) et les deux autres (31, 32) étant disposées de part et d'autre du plan de ladite découpe (1b).

13. Dispositif selon l'une quelconque des revendications 10 à 12, caractérisé en ce que chaque buse (31, 32, 33) est orientable dans un plan horizontal et dans un plan vertical.

14. Dispositif selon l'une quelconque des revendications 10 à 13, caractérisé en ce que l'axe (31a, 32a, 33a) de chaque buse (31, 32, 33) détermine avec l'axe du chalumeau d'oxycoupage un angle d'incidence compris entre 70° et 110°.

15. Dispositif selon l'une quelconque des revendications 10 à 14, caractérisé en ce que chaque buse (31, 32, 33) est formée par une buse à jet plat.

16. Dispositif selon l'une quelconque des revendications 10 à 14, caractérisé en ce que chaque buse (31, 32, 33) est formée par une buse à jet conique.

## Claims

1. A process for cutting and deburring a steel strip (1), the said strip (1) being cut by an oxyacetylene torch (18), the jet of the said torch being perpendicular to one (2) of the principal surfaces of the strip (1), more particularly in order to cut the strip (1) into slabs (1a), **characterised in that** in the region where the strip (1) is being cut, a jet of a fluid which is inert with respect to the jet of the torch is directed on to that principal surface (3) of the strip (1) which is opposite the said principal surface (2) receiving the jet from the oxyacetylene torch (18), and the said jet of fluid prevents production of burrs by granulating the ejected metal prior to solidification thereof.

2. A process in accordance with claim 1, **characterised in that** the jet of fluid has a horizontal aperture angle and a vertical aperture angle between 10° and 40°.

3. A process in accordance with claims 1 and 2, **characterised in that** the jet of fluid is formed by two jets directed towards one another and intersecting in a region which includes the axis (18a) of the oxyacetylene torch (18).

4. A process in accordance with claims 1 and 2, **characterised in that** the jet of fluid is formed from three jets directed towards one another and intersecting in a region which includes the axis (18a) of the oxyacetylene torch (18).

5. A process in accordance with any one of the preceding claims, **characterised in that** the jet or jets of fluid is/are formed by a flat jet with a horizontal aperture angle between 10° and 40°.

6. A process in accordance with any one of the preceding claims, **characterised in that** the inert fluid is air or nitrogen.

7. A process in accordance with any one of the preceding claims, **characterised in that** oxygen is added to the inert fluid in a proportion of 10 to 40%.

8. A deburring device for carrying out the process in accordance with any one of claims 1 to 7, comprising an oxyacetylene torch (18) which is perpendicular to one (2) of the principal surfaces of the strip (1) and is displaceable, at a speed identical to that of the said strip (1), in a direction transverse to the direction of movement of the strip (1), and also in a direction parallel to the said direction of movement, **characterised in that** the said device comprises means (22, 26) for blowing fluid under pressure on to the other principal surface (3) of the strip (1), in the cutting region.

9. A device in accordance with claim 8, **characterised in that** the blowing means (22, 26) are displaceable in a manner synchronised with the oxyacetylene torch (18) in a direction transverse to the direction of movement of the strip (1) and also in a direction parallel to the said direction of movement, at a speed identical to that of the said strip (1).

10. A device in accordance with claims 8 and 9, **characterised in that** the blowing means (22, 26) comprise a nozzle (30) for projecting fluid, arranged within the plane of the cut (1b) in the strip (1).

11. A device in accordance with claims 8 and 9, **characterised in that** the blowing means (22, 26) comprise two nozzles (31, 32) for projecting fluid, the said nozzles being oriented towards one another and arranged on either side of the plane of the cut (1b) in the strip (1), the axes (31a, 32a) of the said nozzles (31, 32) intersecting substantially within the axis (18a) of the oxyacetylene torch (18).

12. A device in accordance with claims 8 and 9, **characterised in that** the blowing means (22, 26) comprise three nozzles (31, 32, 33) for projecting fluid, the said nozzles being oriented towards one another and the axes (31a, 32a, 33a) thereof intersecting substantially within the axis (18a) of the oxyacetylene torch (18), one (33) of the said nozzles being arranged within the plane of the cut (1b) in the strip (1) and the two other nozzles (31, 32) being arranged on either side of the plane of the said cut (1b).

13. A device in accordance with any one of claims 10 to 12, **characterised in that** each nozzle (31, 32, 33) is adjustable in a horizontal and a vertical plane.

14. A device in accordance with any one of claims 10 to 13, **characterised in that** the axis (31a, 32a, 33a) of each nozzle (31, 32, 33) forms an angle of incidence of between 70° and 110° with the axis of the oxyacetylene torch.

15. A device in accordance with any one of claims 10 to 14, **characterised in that** each nozzle (31, 32, 33) is formed by a flat-jet nozzle.

16. A device in accordance with any one of claims 10 to 14, **characterised in that** each nozzle (31, 32, 33) is formed by a conical-jet nozzle.

## Patentansprüche

1. Verfahren zum Schneiden und Abgraten eines Stahlbandes (1), wobei das Band (1) mit Hilfe eines Schneidbrenners (18), dessen Strahl zu einer (2) der Hauptseiten des Bandes (1) senkrecht ist, insbesondere zum Zerschneiden des Bandes (1) zu Brammen (1a) geschnitten wird, dadurch gekennzeichnet, daß man auf die Hauptseite (3) des Bandes (1), die der den Strahl des Schneidbrenners (18) erhaltenden Hauptseite (2) entgegengesetzt ist, und in der Schneidzone des Bandes (1) einen gegenüber dem Strahl des Schneidbrenners inerten Fluidstrahl richtet, der die Erzeugung von Graten verhindert, indem er den Ausstoß des Metalls vor seiner Verfestigung granuliert.

2. Verfahren nach Anspruch 1, dadurch gekennzeichnet, daß der Fluidstrahl einen horizontalen Öffnungswinkel und einen vertikalen Öffnungswinkel von 10° bis 40° besitzt.

3. Verfahren nach den Ansprüchen 1 und 2, dadurch gekennzeichnet, daß der Fluidstrahl von zwei Strahlen gebildet wird, die aufeinander zu gerichtet sind und sich in einer Zone schneiden, in der die Achse (18a) des Schneidbrenners (18) liegt.

4. Verfahren nach den Ansprüchen 1 und 2, dadurch gekennzeichnet, daß der Fluidstrahl von drei Strahlen gebildet wird, die aufeinander zu gerichtet sind und sich in einer Zone schneiden, in der die Achse (18a) des Schneidbrenners (18) liegt.

5. Verfahren nach einem der vorhergehenden Ansprüche, dadurch gekennzeichnet, daß der oder die Fluidstrahlen von einem flachen Strahl gebildet werden, dessen horizontaler Öffnungswinkel 10° bis 40° beträgt.

6. Verfahren nach einem der vorhergehenden Ansprüche, dadurch gekennzeichnet, daß das Inertfluid Luft oder Stickstoff ist.

7. Verfahren nach einem vorhergehenden Ansprüche, dadurch gekennzeichnet, daß man dem Inertfluid Sauerstoff in einem Anteil von 10 bis 40% beigibt.

8. Abgratvorrichtung zur Durchführung des Verfahrens nach einem der Ansprüche 1 bis 7, umfassend einen zu einer (2) der Hauptseiten des Bandes (1) senkrechten Schneidbrenner (18), der einerseits in einer Richtung quer zur Vorschubrichtung des Bandes (1) und andererseits in einer zu dieser Vorschubrichtung parallelen Richtung und mit derselben Geschwindigkeit wie dieses Band (1) beweglich ist, dadurch gekennzeichnet, daß sie Mittel (22, 26) zum Blasen eines Druckfluids in der Schneidzone auf der anderen Hauptseite (3) des Bandes (1) umfaßt.

9. Vorrichtung nach Anspruch 8, dadurch gekennzeichnet, daß die Blasmittel (22, 26) synchron mit dem Schneidbrenner (18) einerseits in einer Richtung quer zur Vorschubrichtung des Bandes (1) und andererseits in einer zu dieser Vorschubrichtung parallelen Richtung und mit derselben Geschwindigkeit wie dieses Band (1) beweglich sind.

10. Vorrichtung nach den Ansprüche 8 und 9, dadurch gekennzeichnet, daß die Blasmittel (22, 26) eine Düse (30) zum Aufspritzen des Fluids umfassen, die in der Ebene des Schnitts (1b) des Bandes (1) angeordnet ist.

11. Vorrichtung nach den Ansprüche 8 und 9, dadurch gekennzeichnet, daß die Blasmittel (22, 26) zwei Düsen (31, 32) zum Aufspritzen des Fluids umfassen, die aufeinander zu gerichtet sind und zu beiden Seiten der Ebene des Schnitts (1b) des Bandes (1) angeordnet sind, wobei die Achsen (31a, 32a) dieser Düsen (31, 32) sich im wesentlichen in der Achse (18a) des Schneidbrenners (18) schneiden.

12. Vorrichtung nach einem der Ansprüche 8 und 9, dadurch gekennzeichnet, daß die Blasmittel (22, 26) drei Düsen (31, 32, 33) zum Aufspritzen des Fluids umfassen, die aufeinander zu gerichtet sind und deren Achsen (31a, 32a, 33a) sich im wesentlichen in der Achse (18a) des Schneidbrenners (18) schneiden, wobei eine (33) dieser Düsen in der Ebene des Schnitts (1b) des Bandes (1) angeordnet ist und die beiden anderen (31, 32) zu beiden Seiten der Ebene dieses Schnitts (1b) angeordnet sind.

13. Vorrichtung nach einem der Ansprüche 10 bis 12, dadurch gekennzeichnet, daß jede Düse (31, 32, 33) in einer horizontalen Ebene und in einer vertikalen Ebene schwenkbar ist.

14. Vorrichtung nach einem der Ansprüche 10 bis 13, dadurch gekennzeichnet, daß die Achse (31a, 32a, 33a) jeder Düse (31, 32, 33) mit der Achse des Schneidbrenners einen Einfallswinkel von 70° bis 110° bildet.

15. Vorrichtung nach einem der Ansprüche 10 bis 14, dadurch gekennzeichnet, daß jede Düse (31, 32, 33) von einer Düse mit flachem Strahl gebildet ist.

16. Vorrichtung nach einem der Ansprüche 10 bis 14, dadurch gekennzeichnet, daß jede Düse (31, 32, 33) von einer Düse mit konischem Strahl gebildet ist.
